Europäisches Patentamt

**European Patent Office**

Office européen des brevets

(19)

(11) Numéro de publication: **0 187 723**
**A2**

(12) # DEMANDE DE BREVET EUROPEEN

(21) Numéro de dépôt: 86400017.9

(22) Date de dépôt: 07.01.86

(51) Int. Cl.⁴: **G 01 N 25/18**

(30) Priorité: 10.01.85 FR 8500312

(43) Date de publication de la demande:
16.07.86 Bulletin 86/29

(84) Etats contractants désignés:
CH DE FR GB IT LI NL

(71) Demandeur: **UNIVERSITE D'ORLEANS**
**Château de la Source**
**F-45067 Orleans Cédex 2(FR)**

(72) Inventeur: **Creff, René François Marie**
**52 quai Saint-Laurent**
**F-45000 Orleans(FR)**

(72) Inventeur: **Andre, Patrick Marie Pierre Jacques**
**116 rue Gustave Haubert**
**F-45100 Orleans(FR)**

(72) Inventeur: **Hostache, Gabriel-Benoit**
**2 boulevard de Lattre de Tassigny**
**F-9000 Belfort(FR)**

(74) Mandataire: **Polus, Camille et al,**
**c/o Cabinet Lavoix 2, Place d'Estienne d'Orves**
**F-75441 Paris Cedex 09(FR)**

(54) **Procédé et capteur de mesure perfectionnés, basés sur l'utilisation d'un thermocouple.**

(57) L'invention a pour but de proposer un procédé et un capteur de mesure perfectionnés, basés sur l'utilisation d'un themocouple. L'élément sensible (1) est chauffé par un courant alternatif provenant d'une source de tension alternative (10). L'une des caractéristiques physiques d'un milieu ambiant (4) étant connue au préalable, l'élément sensible (1) placé en contact du milieu, atteint une température d'équilibre qui est liée à la conductibilité, à la vitesse d'écoulement ou à toutes autres caractéristiques physiques du milieu ambiant (4) de sorte qu'une force eléctromotrice engendrée par effet PELTIER apparait à ses bornes. Un signal est prélevé aux bornes de l'élément sensible (1), ce signal est ensuite filtré par un dispositif de traitement (11) et amplifié par un amplificateur (12) puis appliqué par exemple à un voltmétre (13), ce qui permet de déterminer l'une des caractérstiques physiques dudit milieu par la mesure de la force électromotrice engendrée par effet PELTIER.

FIG.1

La présente invention se rapporte à un procédé et un capteur de mesure basés sur l'utilisation d'un thermocouple, et destinés notamment à la détermination d'une caractéristique physique d'un milieu ambiant à analyser, tel qu'un gaz.

On connaît par exemple par les documents " Revue de physique appliquée", volume 17, n° 4, Avril 1982, p.217-255, " MEASUREMENT TECHNIQUES" vol. 23, n° 6, Juin 1980, p.508-512, et la demande de brevet Européen EP-A-0070801 différents procédés et dispositifs de détermination d'un paramètre d'un milieu ambiant en utilisant différents types de sondes.

On connait également des procédés et des capteurs de mesure, destinés par exemple à mesurer la température d'un gaz, utilisant un thermocouple à effet PELTIER.

Les thermocouples, constitués par la soudure de deux fils ou films comme par exemple de fils de Chromel et d'Alumel formant un élément sensible, que l'on appelle couramment "soudure chaude", sont placés au contact d'un milieu ambiant tel qu'un gaz, afin d'en déterminer la température.

Par le jeu des échanges thermiques, l'élément sensible est porté par le gaz à une température d'équilibre approximativement égale à celle dudit gaz et il apparait aux bornes de cet élément sensible une force électromotrice engendrée par effet PELTIER.

Comme il est bien connu, cette force électromotrice est fonction de la température de l'élément sensible et donc approximativement fonction de la température du gaz.

Les thermocouples, tels qu'ils sont utilisés dans les capteurs de l'état de la technique, présentent certains désavantages. En effet, ce type de

2

capteur présente des constantes de temps relativement importantes et leur sensibilité est relativement faible ce qui nuit considérablement à la précision de la mesure.

Le but de la présente invention est donc de proposer un procédé et un capteur de mesure perfectionnés qui permettent d'augmenter la définition temporelle du capteur et donc de diminuer les constantes de temps du capteur. Un autre but de la présente invention est d'augmenter la sensibilité de mesure du capteur et ceci de façon simple et peu couteuse.

Un autre but de la présente invention est de permettre un élargissement du champ d'application des capteurs de mesure basés sur l'utilisation d'un thermocouple.

A cet effet, l'invention a pour objet un procédé de mesure basé sur l'utilisation d'un thermocouple, destiné notamment à la détermination d'une caractéristique physique d'un milieu ambiant, en contact avec lequel l'élément sensible est placé, caractérisé en ce qu'au moins une des caractéristiques physiques dudit milieu étant connue au préalable, on chauffe l'élément sensible jusqu'à une température d'équilibre qui est fonction d'au moins une caractéristique physique du milieu ambiant dans lequel il est placé et, lorsque cette température d'équilibre est atteinte, on mesure la force électromotrice engendrée par effet PELTIER aux bornes dudit élément sensible de façon à déterminer l'une desdites caractéristiques physiques dudit milieu ambiant.

L'invention a également pour objet un capteur de mesure pour la mise en oeuvre du procédé tel que défini précédemment, destiné à la détermination d'une caractéristique physique d'un milieu, comprenant

3

un élément sensible placé en contact avec le milieu ambiant, caractérisé en ce que les bornes de l'élément sensible sont connectées d'une part à une source d'alimentation en énergie électrique et d'autre part à des moyens de traitement du signal recueilli auxdites bornes, destinés à déterminer la force électromotrice engendrée par l'effet PELTIER dans ledit élément sensible, cette force électromotrice étant liée à la caractéristique physique à déterminer.

L'invention sera mieux décrite à l'aide de la description qui va suivre, faite en se référant aux dessins donnés uniquement à titre d'exemple et sur lesquels:

- la Fig.1 représente un schéma synoptique d'un mode de réalisation d'un capteur selon l'invention;

- les Fig.2,3,4 et 5 représentent différents modes de réalisation d'un élément sensible entrant dans la constitution d'un capteur selon l'invention.

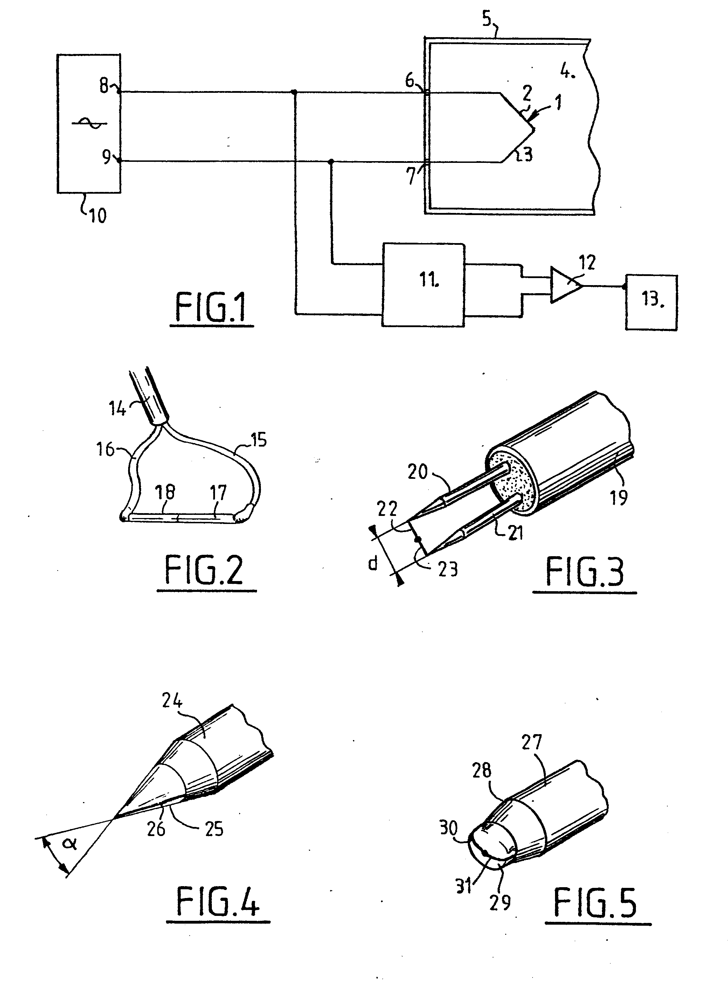

Comme on l'a représenté sur la Fig.1, un capteur de mesure selon l'invention destiné à déterminer la conductibilité thermique d'un mélange gazeux comprend un élément sensible 1 connu constitué par exemple d'un fil 2 en Chromel et d'un fil 3 en Alumel, la jonction de ces deux fils étant réalisées de manière connue de façon à former une "soudure chaude".

Cet élément sensible 1 est placé au contact, par exemple, d'un gaz 4 dont il faut déterminer la conductibilité thermique, ce gaz étant contenu dans une cellule close d'analyse 5 classique.

Deux trous traversants 6 et 7 sont ménagés dans l'une des parois de la cellule d'analyse 5 de façon à laisser passer les fils 2 et 3 respectivement. Ces trous sont munis de dispositifs d'étanchéité clas-

4

.siques (non représentés).

Les fils 2 et 3 sont reliés aux bornes de sortie 8 et 9 respectivement d'une source d'alimentation en énergie électrique 10. Cette source 10 peut avantageusement être une source de tension alternative.

Les fils 2 et 3 sont également reliés aux bornes d'entrée d'un dispositif de traitement 11 destiné à dissocier la force électromotrice engendrée par effet PELTIER dans l'élément sensible, de la tension d'alimentation provenant de la source 10. Ce dispositif de traitement 11 peut avantageusement être constitué de filtres permettant de supprimer la composante alternative du signal prélevé sur l'élément sensible.

Dans le présent mémoire, on n'a volontairement pas tenu compte de la force électromotrice de THOMSON engendrée par exemple dans des fils dont les extrémités sont portées à des températures différentes comme cela peut être le cas pour les fils 2 et 3 dont l'une des extrémités est reliée à l'élément sensible disposé dans la cellule d'analyse et une autre, au dispositif de traitement 11 disposé à l'extérieur de celle-ci. Le dispositif de traitement reçoit alors une force électromotrice dite de SEEBECK qui est la somme des forces électromotrices de PELTIER et de THOMSON. Cependant, pour des raisons de clarté de l'exemple décrit, on considère que cette force électromotrice de THOMSON est négligeable par rapport à la force électromotrice de PELTIER, de sorte que le dispositif de traitement 11 est supposé ne recevoir qu'une force électromotrice de PELTIER.

Il va de soi que selon le mode de réalisation utilisé, il y aura lieu de tenir compte de la force électromotrice de THOMSON.

Les bornes de sortie du dispositif de traitement 11 sont reliées aux bornes d'entrée d'un amplificateur 12 de la force électromotrice PELTIER, à la sortie duquel est connecté un dispositif de mesure 13 approprié tel qu'un voltmètre ou autre dispositif de mesure.

La Fig.2 représente une première configuration d'un élément sensible entrant dans la constitution d'un capteur selon l'invention.

Cet élément sensible peut se présenter sous la forme d'une fourche à deux bras comportant un organe support cylindrique 14 à partir duquel s'étendent deux fils courbés 15 et 16 de deux métaux différents, par exemple en Chromel-Alumel, supportant à l'une de leurs extrémités, de la même façon, deux fils en Chromel-Alumel 17 et 18. Ces fils 17 et 18 ont une de leurs extrémités en contact soudées de façon connue de manière à constituer une "soudure chaude".

Sur la Fig.3, l'élément sensible comporte également un organe support cylindrique 19 à partir duquel s'étendent deux broches 20 et 21 à l'extrémité desquelles sont reliés des fils en Chromel-Alumel 22 et 23 constituant l'élément sensible.

Les extrémités des broches 20 et 21 sont séparées d'une distance d.

Sur la Fig.4, on a représenté une autre configuration de l'élément sensible. Un organe support 24 comporte un élément de support isolant conique 25 ayant un angle au sommet pouvant varier, selon la vitesse d'écoulement du milieu entre 0 et 90°, sur lequel sont disposés symétriquement des films en Chromel-Alumel ou tous autres métaux formant un couple dont un seul 26 est représenté.

6

Sur la Fig.5, on a représenté un autre mode de réalisation d'un élément sensible comportant un organe support cylindrique 27 dont une extrémité 28 se présente sous une forme tronconique comportant une extrémité isolante arrondie 29 sur laquelle sont disposés deux films en Chromel-Alumel 30,31 constituant l'élément sensible.

Le fonctionnement du capteur dans l'application d'analyse pour gaz, selon l'invention est le suivant.

En plaçant un gaz 4 dans une cellule d'analyse 5 de façon à ce que sa vitesse de déplacement soit nulle, on favorise les échanges thermiques par conduction entre l'élément sensible 1 et le gaz 4. L'élément sensible est chauffé par le courant alternatif provenant de la source d'alimentation 10, de sorte qu'après un régime transitoire, l'élément sensible 1 atteint une température d'équilibre qui est fonction des échanges thermiques entre cet élément sensible et le gaz. Ces échanges sont déterminés dans le cas présent, par la conductibilité du gaz. Selon des principes bien connus, une force électromotrice engendrée par effet PELTIER apparaît aux bornes de l'élément sensible 1 en fonction de la température d'équilibre du capteur. Le dispositif de traitement 11 prélève un signal aux bornes de l'élément sensible et il élimine la composante alternative de ce signal, pour ne délivrer en sortie que la force électromotrice engendrée par effet PELTIER.

Cette force électromotrice est ensuite amplifiée par l'amplificateur 12 et mesurée par exemple par le voltmètre 13. La valeur de cette force électromotrice étant une fonction linéaire de la température d'équilibre de l'élément sensible 1, on peut ainsi

7

déterminer par les lois classiques d'échanges, la conductibilité du gaz.

Cette conductibilité étant spécifique à chaque gaz, on peut donc déterminer la nature du gaz en connaissant ce paramètre. Ce procédé de mesure est basé sur le fait que l'on détermine la température d'équilibre thermique d'un élément sensible chauffé par un courant alternatif dans une situation où les échanges thermiques par conduction sont prépondérants par rapport aux échanges convectifs et radiatifs.

On sait que les transferts de chaleur entre un élément sensible et un milieu ambiant sont essentiellement conditionnés par la mise en écoulement ou non du milieu, la conductibilité thermique de ce milieu et l'émissivité des fils constituant le thermocouple.

On peut donc en privilégiant tel ou tel type de transfert, comme dans le cas de l'application décrite ci-dessus où l'on a placé le gaz dans une cellule d'analyse close, de sorte que la vitesse de déplacement de ce gaz soit nulle, déterminer d'autres caractéristiques du milieu ambiant.

Ainsi, par exemple, on peut déterminer la vitesse d'écoulement du milieu ambiant.

Pour cela, il faut privilégier les échanges convectifs par rapport aux échanges par conduction.

On place l'élément sensible par exemple celui représenté à la Fig.4 ou Fig.5 qui est particulièrement bien adapté à la mesure de vitesses élevées de gaz, dans un passage d'écoulement.

L'élément sensible est chauffé par un courant alternatif provenant d'une source d'alimentation comme dans le cas précédent. Un signal est prélevé aux bornes de l'élément sensible et filtré par un disposi-

0187723

8

tif de traitement du signal de sorte que la force électromotrice engendrée par effet PELTIER est séparée de l'alimentation pour être mesurée. Connaissant les caractéristiques physiques du gaz et donc sa conductibilité, il est possible de déterminer la vitesse d'écoulement en fonction de la température d'équilibre de l'élément sensible, celle-ci correspond en effet à la force électromotrice engendrée par effet PELTIER. On peut donc ainsi déterminer la vitesse de l'écoulement du gaz en déterminant l'équilibre thermique de l'élément sensible.

D'autres applications sont également possibles. Ainsi, on peut mesurer le débit de l'écoulement du milieu ambiant, la température de changement de phases d'un fluide en mesurant la différence de conductibilité du milieu. On peut également mesurer les flux de conduction dans un solide et sa conductibilité, de même que le flux de convection dans un écoulement fluide, la nature de la composition gazeuse si le milieu ambiant est constitué d'un mélange de gaz et la nature de la composition fluide si le milieu ambiant est constitué d'un mélange de fluide ou de deux phases liquide et vapeur d'un même fluide.

Ce procédé et ce capteur de mesure peuvent donc être appliqués notamment à la catharométrie et à la mesure de vitesse d'écoulement d'un milieu ambiant, en particulier, d'un milieu ambiant corrosif car l'élément sensible est d'un prix de revient faible et peut être remplacé facilement.

## REVENDICATIONS

1. Procédé de mesure basé sur l'utilisation d'un thermocouple, destiné notamment à la détermination d'une caractéristique physique d'un milieu ambiant (4) en contact avec lequel l'élément sensible (1) est placé, caractérisé en ce qu'au moins une des caractéristiques physiques dudit milieu étant connue au préalable, on chauffe l'élément sensible (1) jusqu'à une température d'équilibre qui est fonction d'au moins une caractéristique physique du milieu ambiant dans lequel il est placé, et, lorsque cette température d'équilibre est atteinte, on mesure la force électromotrice engendrée par effet PELTIER aux bornes dudit élément sensible de façon à déterminer l'une desdites caractéristiques physiques dudit milieu ambiant (4).

2. Procédé selon la revendication 1, caractérisé en ce qu'on chauffe l'élément sensible par un courant alternatif et en ce qu'on filtre le signal prélevé aux bornes de l'élément sensible pour éliminer la composante alternative.

3. Capteur de mesure pour la mise en oeuvre du procédé tel que défini dans les revendications 1 et 2, destiné à la détermination d'une caractéristique physique d'un milieu comprenant un élément sensible (1) placé en contact avec le milieu ambiant (4), caractérisé en ce que les bornes de l'élément sensible (1) dudit thermocouple sont connectées d'une part à une source d'alimentation en énergie électrique (10) et d'autre part, à des moyens de traitement (11) du signal recueilli auxdites bornes, destiné à déterminer la force électromotrice engendrée par effet PELTIER dans ledit élément sensible, cette force électromotrice étant liée à la caractéristique physique à déterminer.

10

4. Capteur selon la revendication 3, caractérisé en ce que la source d'alimentation (10) en énergie électrique est une source de tension alternative et en ce que les moyens de traitement (11) du signal recueilli aux bornes dudit élément sensible (1) sont constitués par des filtres destinés à éliminer la composante alternative du signal.

5. Capteur selon l'une quelconque des revendications 3 ou 4, caractérisé en ce que l'élément sensible (1) est disposé sur un élément de support isolant conique (25) présentant un angle au sommet pouvant varier entre 0 et 90°.

6. Capteur selon l'une quelconque des revendications 3 ou 4, caractérisé en ce que l'élément sensible (1) est disposé sur une extrémité isolante arrondie (29) d'un organe support (27).

7. Capteur selon l'une quelconque des revendications 3 à 6, caractérisé en ce que les extrémités de fils (2,3) reliées à l'élément sensible (1) étant portées à une température différente de celle à laquelle sont portées les extrémités de ces fils, reliées aux moyens de traitement (11), les moyens de traitement reçoivent outre la force électromotrice engendrée par effet PELTIER dans l'élément sensible, la force électromotrice engendrée par effet THOMSON dans lesdits fils.

1/1 0187723

FIG.1

FIG.2

FIG.3

FIG.4

FIG.5